# EUROPÄISCHE PATENTSCHRIFT

(11) **EP 2 335 398 B1**
(45) Veröffentlichungstag und Bekanntmachung des Hinweises auf die Patenterteilung: **13.06.2018**
(21) Anmeldenummer: 09740050.1
(22) Anmeldetag: 18.09.2009
(51) Int. Cl.: H04L 12/12, H04M 3/36, H04M 7/00, H04W 52/02, H04M 3/42

(54) **VERFAHREN UND TELEKOMMUNIKATIONSANLAGE ZUM STEUERN DES ENERGIEVERBRAUCHS EINES TELEFONS**
METHOD AND TELECOMMUNICATION SYSTEM FOR CONTROLLING POWER CONSUMPTION OF A TELEPHONE
PROCÉDÉ ET INSTALLATION DE TÉLÉCOMMUNICATION DE COMMANDE DE LA CONSOMMATION D'ÉNERGIE D'UN TÉLÉPHONE

(30) Priorität: 24.09.2008 DE 102008048468
(43) Veröffentlichungstag der Anmeldung: 22.06.2011
(73) Patentinhaber: Unify GmbH & Co. KG, 80807 München (DE)
(72) Erfinder: SCHAADE, Stephan, 86807 Buchloe (DE); SCHMID, Christoph, AT-1140 Wien (AT)
(74) Vertreter: Fritzsche, Thomas
(86) Internationale Anmeldenummer: PCT/EP2009/006768
(87) Internationale Veröffentlichungsnummer: WO 2010/034436

(56) Entgegenhaltungen:
- WO-A1-2008/070252
- WO-A1-2009/100041
- DE-A1- 19 717 151
- US-A1- 2005 177 627
- US-A1- 2006 019 723
- US-B1- 6 457 132
- EPA: "ENERGY STAR Program Requirements for Computers (Version 4.0)" INTERNET CITATION 1. Januar 2007 (2007-01-01), Seiten 1-20, XP002521775 Gefunden im Internet: URL:http://www.energystar.org.tw/pdf/Compu ter_Spec_Final.pdf> [gefunden am 2009-03-31]

## Beschreibung

Die Erfindung betrifft unter anderem ein Verfahren zum Steuern des Energieverbrauchs eines Telefons, wobei für das Telefon automatisch ein Energiesparmodus eingeschaltet und/oder ausgeschaltet wird.

Beispielsweise ist es bekannt, bei einem Mobilfunktelefon eine Anzeigeeinheit in einen Energiesparmodus zu schalten, falls eine bestimmte Zeitdauer kein Tastendruck erfolgt. Auf diese Weise kann die Betriebsdauer eines Akkus erheblich verlängert werden.

Aus der WO 2008/070252 A1 ist eine Hilfsperipherie zum Alarmieren eines Computers über einen eingehenden Ruf bekannt. Dabei wird ein Zustand betrachtet, in welchem ein Computer oder Computersystem nicht in der Lage ist, einen eingehenden Ruf zu verarbeiten. Ein solcher Zustand kann ein Hibernationszustand, ein ausgeschalteter Zustand, oder ein Zustand sein, in welchem das Computersystem nicht als aktiver Kommunikationsendpunkt dient, etwa weil ein Benutzer gegenwärtig ausgeloggt ist. Vor dem Hintergrund einer unter der Bezeichnung SIP (Session Initiation Protocol) bekannten Technik wird eine Rufsteuerungshilfskomponente (auxiliary call control component) vorgeschlagen, welche einen eingehenden Ruf zunächst annimmt, an das Computersystem ein Signal sendet, um dieses in einen geeigneten Zustand zu versetzen, um den Ruf zu verarbeiten, und das Computersystem über den eingehenden Ruf informiert.

Aus der DE 197 17 151 A1 ist ein Facsimile-Gerät bekannt, bei welchem ein Energiesparbetrieb in Abhängigkeit von einer zeitlich festgelegten Übertragung/Sendung, von vorab festgelegten Zeitspannen A und B im Sinne einer Nachlaufzeit und einer Vorlaufzeit, sowie von zwischen zeitlich festgelegten Übertragungen/Sendungen stattfindenden manuellen Eingaben oder Empfangsereignissen gesteuert wird.

US 2006/0019723 A1 offenbart ein System und ein Verfahren zum automatischen Steuern des Energiesparvorgangs eines tragbaren Kommunikationssystems unter Verwendung historischer Nutzungsinformationen, wobei die Nutzungsinformationen akkumuliert und in einer Nutzungsinformationsdatenbank gespeichert werden können. Ein Energiespar-Betriebsprofil ("power-save operating profile") wird aus den akkumulierten Nutzungsinformationen bestimmt, wobei ein Benutzer Betriebsanweisungen für das tragbare Kommunikationssystem vorgeben kann, dass für besondere Spitzen-Betriebszeiten oder während eines ganzen Arbeitstages oder an Wochenenden oder an Urlaubstagen dieses immer eingeschaltet ist, wobei solche Betriebsanweisungen in ein Energiespar-Betriebsprofil eingebunden werden. US 6 457 132 B1 offenbart ein System und Verfahren zum Steuern des Energiesparvorgangs in einem mobilen oder stationären Endgerät auf der Basis von kalendarischen Vorgaben.

Jedoch gibt es beispielsweise auch Telefone, die an Telekommunikationsanlagen betrieben werden und/oder die über eine Leitung stationär mit einem Telefonnetz oder einem Datenübertragungsnetz verbunden sind. Die Telekommunikationsanlage kann eine herkömmliche Telekommunikationsanlage für durchschaltevermittelte Telefongespräche sein oder aber eine IP (Internet Protokoll) Telefonanlage für IP-Telefone. Auch Kombinationen aus beiden Telekommunikationsanlagen sind möglich. Eine Telekommunikationsanlage dient dem Vermitteln von Telefongesprächen insbesondere innerhalb des privaten Geländes eines Betreibers der Telekommunikationsanlage, z.B. einer Produktionsfirma oder eines Dienstleistungsunternehmens. Beispiele für Telekommunikationsanlagen sind beispielsweise die Anlagen vom Typ HiCOM bzw. vom Typ HiPath der Firma Siemens AG bzw. der Firma Siemens Enterprise Communications.

An eine Telekommunikationsanlage sind beispielsweise zwischen drei bis zu mehreren tausend Teilnehmer angeschlossen. Die Telekommunikationsanlage realisiert eine Vielzahl von Leistungsmerkmalen, wie sie auch von Vermittlungsstellen des öffentlichen Telekommunikationsnetzes bekannt sind, beispielsweise Rufweiterleitung, Konferenzschaltung usw. Insbesondere bei Telekommunikationsanlagen gibt es jedoch auch Kurzwahlrufnummern, die sich von den Rufnummern des öffentlichen Telekommunikationsnetzes unterscheiden.

Es ist Aufgabe der Erfindung ein einfaches Verfahren zum Steuern des Energiesparmodus eines Telefons anzugeben, das insbesondere einen Energiesparmodus abhängig von Kriterien ermöglicht, die bisher noch nicht berücksichtigt worden sind. Außerdem wird eine zugehörige Telekommunikationsanlage angegeben. Diese Aufgabe wird durch die im Patentanspruch 1 oder 2 angegebenen Verfahrensschritte sowie durch eine Telekommunikationsanlage nach Anspruch 10 oder 11 gelöst. Weiterbildungen sind in den Unteransprüchen angegeben.

In dem Verfahren zum Steuern des Energieverbrauchs eines IP-Telefons wird abhängig von mindestens einer vorgegebenen Zeitspanne, innerhalb der das Telefon voraussichtlich nicht genutzt wird, automatisch ein Energiesparmodus eingeschaltet und/oder ausgeschaltet, wobei die vorgegebene Zeitspanne auf der Grundlage einer statistischen Auswertung über ein bisheriges Nutzungsverhalten eines Benutzers des Telefons (10) bestimmt wird. Dies kann beispielsweise abhängig von:
- Bedieneingaben an dem Telefon, d.h. insbesondere Tastendruck, und/oder
- ankommenden Daten für das Telefon, z.B. ein ankommender Ruf, und/oder
- Aktivitäten eines mit dem Telefon verbundenen Endgeräts geschehen.

Auch kann eine Kombination aus den genannten Kriterien in das Verfahren einbezogen werden. Durch das Berücksichtigen der genannten Kriterien lässt sich die Energiesparfunktion benutzerfreundlicher ausgestalten und gezielter an das Benutzerverhalten eines Teilnehmers anpassen. Insbesondere im Zusammenhang mit Telefonen, die an Telekommunikationsanlagen betrieben werden, lässt sich das Verfahren auf einfache Art und Weise in die Steuerung der Telekommunikationsanlage einbinden.

Es können die folgenden Schritte durchgeführt werden:
- für das Telefon automatisch Erzeugen von Daten, die angeben, wann das Telefon voraussichtlich benutzt wird,
- aus den erzeugten Daten automatisch Bestimmen, wann das Telefon voraussichtlich nicht benutzt wird, und
- für das Telefon automatisch Einschalten des Energiesparmodus für den so bestimmten Zeitraum.
Insbesondere lässt sich ein Prozessortakt des Telefons oder von Teilen des Telefons verringern und/oder größere Energieverbraucher des Telefons können ausgeschaltet oder in ihrer Leistung verringert werden, z.B. ein Bildschirm oder eine andere Anzeigeeinheit.

Das angegebene Verfahren beruht auf der Überlegung, dass der betreffende Nutzer des Telefons ein bestimmtes Nutzungsverhalten hat, das für aufeinander folgende Tage und/oder für bestimmte Tage aufeinander folgender Wochen gleich bleibt. Aufgrund des gleich bleibenden Verhaltens lassen sich Aussagen über eine zukünftige Nutzung des Telefons mit großer Sicherheit treffen.

Das automatische Bestimmen kann im Telefon durchgeführt werden, insbesondere bei einem IP-Telefon. Insbesondere IP-Telefone haben im Vergleich zu herkömmlichen Festnetztelefonen eine komplexere Steuerung, die auch die zum Durchführen der Verfahrensschritte erforderlichen Aufgaben durchführen kann. Alternativ kann das automatische Bestimmen auch an einer zentralen Stelle oder in einer unabhängigen Einheit durchgeführt werden.

Es können auch Daten vorgegeben werden, die angeben, wann das Telefon voraussichtlich nicht benutzt wird, wobei die vorgegebenen Daten durch vorgegebene Zeiten, nämlich kalendarische und/oder tageszeitliche Vorgaben, die beispielsweise Betriebsferien, Wochenenden, Feiertage, Urlaubstage und/oder Nachtzeiten betreffen, festgelegt sind und vorzugsweise zentral für mehrere Telefone (10) vorgegeben werden. Das Telefon wird dann abhängig von diesen Daten automatisch in den Energiesparmodus geschaltet bzw. wird der Energiesparmodus beendet. Die Vorgabe der Daten erfolgt insbesondere unabhängig von einer statistischen Erfassung des Nutzerverhaltens des Nutzers.

Die vorgegebenen Daten können zentral für mehrere Telefone vorgegeben werden oder lokal für jedes Telefon. Das Ausschalten abhängig von den vorgegebenen Daten lässt sich lokal steuern, das heißt im Telefon, oder auch von einer zentralen Stelle aus.

Beispielsweise kann mit hoher Sicherheit vorausgesagt werden, dass Telefone in Firmen an Feiertagen oder zu Nachtzeiten nicht benutzt werden.

Alternativ oder kumulativ lässt sich die Zeitspanne erfassen, in der keine Benutzereingaben am Telefon erfolgen und/oder keine Daten zum Telefon oder vom Telefon übertragen werden. Die so erfasste Zeit kann mit einer vorgegebenen Zeitspanne verglichen werden, die beispielsweise durch den Nutzer bei einer Konfiguration vorgegeben werden kann. Für das Telefon kann automatisch der Energiesparmodus eingeschaltet werden, wenn die erfasste Zeitspanne größer als die oder gleich der vorgegebenen Zeitspanne ist. Diese Maßnahme ist insbesondere in Kombination mit den anderen genannten Maßnahmen sehr wirkungsvoll für die Energieeinsparung.

Im Energiesparmodus kann die Helligkeit einer Anzeigeeinheit verringert werden und/oder die Anzeigeeinheit kann ausgeschaltet werden. Beispielsweise wird zunächst die Helligkeit verringert und nach Ablauf einer bestimmten Zeitspanne in einer zweiten Phase die Anzeigeeinheit ausgeschaltet.

Für das Telefon kann automatisch der Energiesparmodus ausgeschaltet werden bei einer Benutzereingabe, einem ankommenden Ruf oder der Ausführung einer Funktion des über das Telefon angeschlossenen Endgerätes. Das Einschalten kann insbesondere unabhängig von den anderen genannten Zeitspannen erfolgen. Weiterhin alternativ oder kumulativ kann das Telefon mit einem Endgerät eines Netzwerkes gekoppelt sein, vorzugsweise über eine in dem Telefon (10) vorhandene Datenpaketweiterleitungseinrichtung. Für das Telefon kann automatisch ein Energiesparmodus eingeschaltet oder ausgeschaltet werden abhängig von einem Datenstrom von oder zu dem Endgerät.

Hierbei wird davon ausgegangen, dass die Nutzung des Endgeräts dafür spricht, dass sich der Nutzer in der Nähe des Telefons aufhält und damit eine Nutzung sehr wahrscheinlich ist, beispielsweise im Anschluss an die Datenübertragung zu dem Endgerät.

Im Telefon kann beispielsweise ein sog. Miniswitch vorhanden sein, an den das Telefon und das Endgerät angeschlossen sind. der Miniswitch lässt sich vom Telefon aus einfach überwachen und in die Steuerung für den Energiesparmodus einbeziehen. Beispielsweise leitet der Miniswitch Datenpakete anhand einer sog. MAC-Adresse (Medium Access Control) weiter.

Das Telefon wird auch von einem Nutzer alternativ, d.h. anstelle, zu dem Endgerät genutzt. Das Erfassen der Nutzung des Endgeräts erfolgt automatisch. Für das Telefon wird automatisch der Energiesparmodus eingeschaltet und/oder ausgeschaltet abhängig von der erfassten Nutzung des Endgeräts. Das andere Endgerät baut eine Verbindung zu einer Telekommunikationsanlage auf, an der auch das Telefon betrieben wird. Über diese Verbindung meldet sich das Endgerät dann bei der Telekommunikationsanlage an. Ein derartiger Anmeldemodus ist als Softclient bekannt, beispielsweise im Zusammenhang mit der Telekommunikationsanlage HiPath 4000 oder 8000. Das Datenübertragungsnetz zwischen der Telekommunikationsanlage und dem Endgerät ist insbesondere ein IP-Netz (Internet Protokoll) oder das Internet selbst.

So wird der Energiesparmodus eingeschaltet, wenn das andere Endgerät genutzt wird, weil in diesem Fall davon ausgegangen wird, dass das Telefon zur Zeit nicht genutzt wird.

Der Energiesparmodus wird beispielsweise wieder eingeschaltet, wenn das andere Endgerät nicht mehr genutzt wird.

Die Telekommunikationsanlage kann auch das Schalten des Energiesparmodus für das Telefon veranlassen. So wird der Energiesparmodus für das Telefon eingeschaltet, solange eine Umleitung von ankommenden Rufen zu dem weiteren Endgerät aktiv ist.

Alternativ ist ein Endgerät eines Datenübertragungsnetzes vorgesehen. Das Datenübertragungsnetz ist ein Funk-Datenübertragungsnetz, insbesondere ein WLAN (Wireless Local Area Network), d.h. ein Netz gemäß Standard IEEE 802.11 (Instituts of Electrical and Electronics Engineers). Solche Datenübertragungsnetze sind bereits verbreitet und werden in zunehmendem Maße auch zur Abdeckung des gesamten Firmengeländes von Firmen verwendet. Eine Steuerung des Datenübertragungsnetzes baut eine Verbindung zu einer Telekommunikationsanlage auf, an der auch das Telefon betrieben wird. Der Telekommunikationsanlage wird von der Steuerung ein Datum übermittelt, das vom Standort des Endgerätes abhängt. Abhängig von dem Datum wird für das Telefon das Einschalten und/oder das Ausschalten des Energiesparmodus veranlasst. Insbesondere gibt das Datum an, dass das Endgerät ein Datenübertragungsnetz verlassen hat, das sich auch im Bereich des Telefons befindet. In diesem Fall wird davon ausgegangen, dass das Telefon auch in nächster Zeit nicht benutzt wird. Anstelle des gesamten Datenübertragungsnetzes wird jedoch auch auf Teile des Datenübertragungsnetzes Bezug genommen. Beispielsweise wird das Telefon in den Energiesparmodus geschaltet, wenn sich das Endgerät in einem anderen Teil des Datenübertragungsnetzes befindet als ein solcher Teil des Datenübertragungsnetzes, der auch in einem Bereich liegt, in dem das Telefon angeschlossen ist.

Insbesondere veranlasst die Telekommunikationsanlage das Umschalten in den Energiesparmodus abhängig von dem Datum. Alternativ wird jedoch auch eine zwischen die Telekommunikationsanlage und das Telefon geschaltete Vorrichtung verwendet. Das Endgerät kann zusätzlich auch als ein Endgerät eines Mobilfunknetzes betrieben werden, beispielsweise eines GSM-Netzes (Global System Mobile), eines UMTS-Netzes (Universal Mobile Telecommunications System) oder eines LTE-Netzes (Long Term Evolution). Endgeräte, die sowohl in einem Funk-Datenübertragungsnetz als auch in einem Mobilfunknetz betrieben werden können, werden auch als duale Mobilfunkgeräte bezeichnet. Lösungen zur Verwendung solcher dualen Mobilfunktelefone sind beispielsweise im Zusammenhang mit dem Konzept "Mobile Connect" der Firma Siemens AG bekannt.

Die Erfindung betrifft außerdem eine Vorrichtung, nämlich eine Telekommunikationsanlage umfassend eine Steuereinheit, wobei die Vorrichtung Einheiten zur Durchführung eines Verfahrens gemäß vorstehender Beschreibung aufweist. Damit gelten die oben für die Verfahren genannten technischen Wirkungen auch für die Telekommunikationsanlage und deren Weiterbildungen.

Im Folgenden werden Ausführungsbeispiele der Erfindung anhand der beiliegenden Zeichnungen erläutert. Darin zeigen:
- Fig. 1: Betriebsarten eines IP-Telefons,
- Fig. 2: eine Steuerung für einen Energiesparmodus des IPTelefons abhängig von Nutzungsgewohnheiten,
- Fig. 3: Funktionseinheiten einer IP-Telekommunikationsanlage,
- Fig. 4: Funktionseinheiten des IP-Telefons,
- Fig. 5: Funktionseinheiten einer weiteren IP-Telekommunikationsanlage,
- Fig. 6: Einheiten zum Realisieren eines mobilitätsgesteuerten Energiesparmodus,
- Fig. 7: Einheiten zum Realisieren eines Energiesparmodus abhängig vom Standort eines dualen Mobiltelefons,
- Fig. 8: Funktionseinheiten einer IP-Telekommunikationsanlage, und
- Fig. 9: Funktionseinheiten eines IP-Telefons.

In den Figuren werden gleiche Bezugszeichen für gleiche technische Sachverhalte verwendet. Sofern in dieser Anmeldung "kann" verwendet wird, steht dies sowohl für tatsächlich realisierte technische Sachverhalte als auch für die Möglichkeit einer solchen Realisierung. Die im Folgenden erläuterten Ausführungsbeispiele dienen dem besseren Verständnis der Erfindung und sind nicht für eine einschränkende Auslegung der Erfindung heranzuziehen.

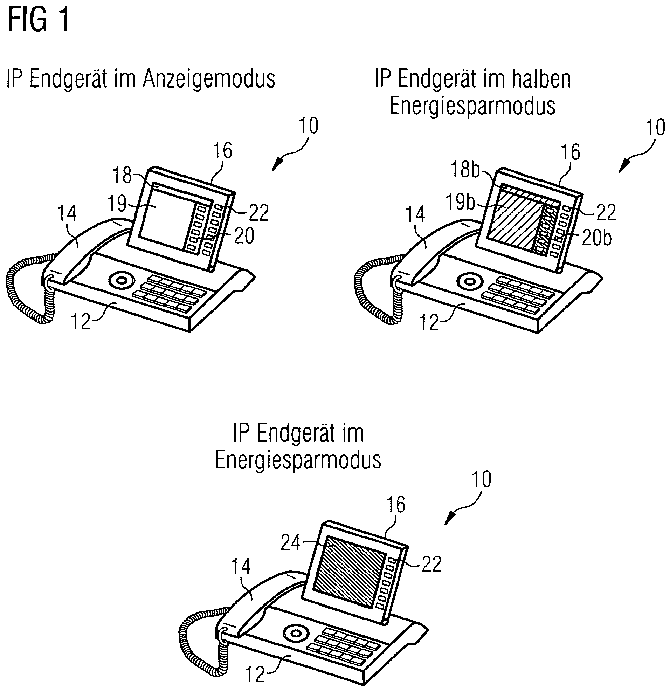

Fig. 1 zeigt Betriebsarten eines IP-Telefons 10. Das Telefon 10 arbeitet gemäß Internetprotokoll und enthält:
- ein Gehäuse 12,
- einen Telefonhörer 14 mit Sprechmuschel und Lautsprechermuschel,
- einen Bildschirm 16.

In einem Anzeigemodus wird auf dem Bildschirm 16 beispielsweise eine horizontale Menüleiste 18, eine Arbeitsfläche 19 und eine vertikale Menüleiste 20 angezeigt. Die vertikale Menüleiste zeigt die Belegung von Funktionstasten 22 an, die sich an der rechten Rahmenleiste des Bildschirms 16 befinden. In einem teilweisen Energiesparmodus werden die horizontale Menüleiste 18 und die Arbeitsfläche 19 nur mit einer verringerten Helligkeit dargestellt, siehe Menüleiste 18b und Arbeitsfläche 19b. Die ohnehin sehr dunkle vertikale Menüleiste 20 ist im halben bzw. teilweisen Energiesparmodus nicht mehr zu erkennen, siehe vertikale Menüleiste 20b.

Beispielsweise wird im teilweisen Energiesparmodus die Helligkeit des Bildschirms 16 verringert, beispielsweise eines TFT-Bildschirms (Thin Film Transistor) bzw. einer LCD-Anzeige (Liquid Crystal Display).

Im Energiesparmodus wird der Bildschirm 16 des Telefons 10 beispielsweise vollständig abgeschaltet, so dass auf dem Bildschirm 16 nur eine schwarze Fläche 24 zu sehen ist. Andere Funktionen des Telefons 10 sind jedoch in diesem Energiesparmodus weiterhin verfügbar, beispielsweise eine Rufannahme oder die Eingaben von Verbindungsanforderungen über einen Tastendruck auf eine Taste der Tastatur im Gehäuse 12 bzw. der Menüleiste 20.

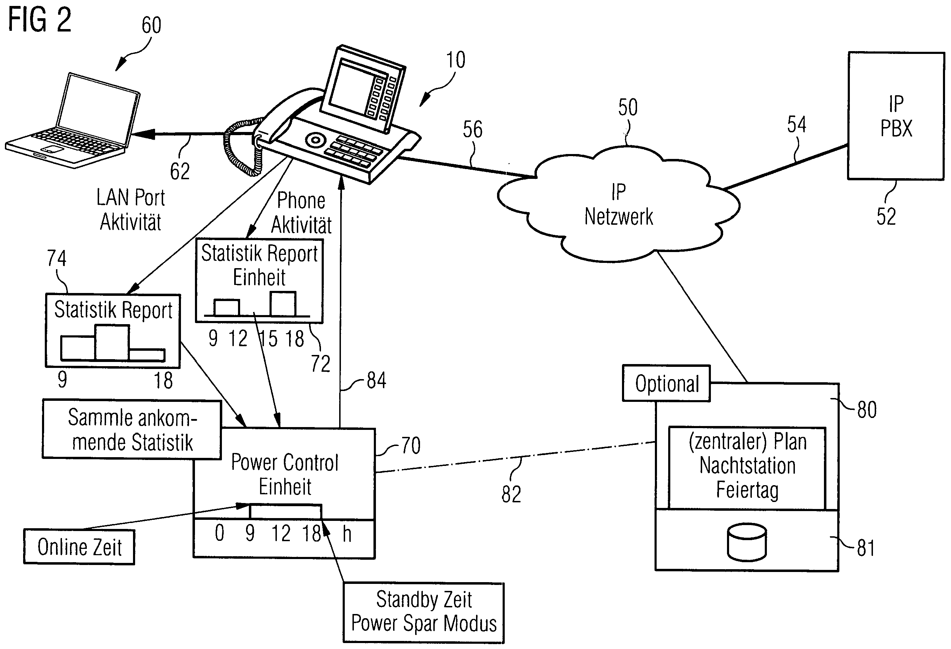

Fig. 2 zeigt eine Steuerung für einen Energiesparmodus des Telefons 10 abhängig von Nutzungseigenschaften des Nutzers des Telefons 10. Ein IP-Netzwerk 50 dient zum Anschluss des Telefons 10 über eine Verbindung 56. Mit dem Netzwerk 50 ist außerdem eine Telekommunikationsanlage 52 verbunden, siehe Verbindung 54. Die Telekommunikationsanlage 52 ist beispielsweise eine Anlage vom Typ HiPath der Firma Siemens AG. Die Telekommunikationsanlage 52 dient zum Anschluss einer Vielzahl von IP-Telefonen einer Firma, wobei diesen IP-Telefonen eine Vielzahl von Leistungsmerkmalen zur Verfügung gestellt wird, wie Rufumleitung, Firmenrufnummer usw.

Ein Notebook 60 oder eine andere Recheneinheit ist über eine Verbindung 62 mit dem Telefon 10 verbunden. Beispielsweise befindet sich im Telefon 10 ein sog. Miniswitch, der Datenpakete zwischen dem Netzwerk 50, dem Telefon 10 und dem Notebook 60 weiterleitet, insbesondere auf der Basis MAC-Adressen.

Eine Leistungssteuerungseinheit 70 kann als Bestandteil der Telekommunikationsanlage 52, als unabhängige Einheit oder als Bestandteil des IP-Telefons 10 realisiert werden. Die Funktion der Leistungssteuerungseinheit 70 wird weiter unten näher erläutert.

Die Leistungssteuerungseinheit 70 arbeitet mit einer Statistikeinheit 72 zusammen, welche Daten sammelt, die die Benutzung des Telefons 10 durch den Nutzer beschreiben. Insbesondere werden Zeiten erfasst, in denen das Telefon 10 vom Nutzer benutzt wird, und Zeiten, in denen das Telefon 10 vom Nutzer nicht benutzt wird. Im Ausführungsbeispiel wird davon ausgegangen, dass die Statistikeinheit 72 festgestellt hat, dass das Telefon 10 zwischen 9.00 Uhr und 12.00 Uhr sowie zwischen 15.00 Uhr und 18.00 Uhr genutzt wird. Die Statistikeinheiten 72, 74 können auch im Telefon 10, unabhängig oder in der Telekommunikationsanlage 52 realisiert werden.

Optional arbeitet die Leistungssteuerungseinheit 70 auch mit einer Statistikeinheit 74 zusammen, welche die Aktivität des Notebooks 60 erfasst. Im Ausführungsbeispiel ist das Notebook 60 beispielsweise zwischen 9.00 Uhr und 18.00 Uhr aktiv.

Die Leistungssteuerungseinheit 70 erzeugt aus den Statistikdaten der Statistikeinheit 72 bzw. der Statistikeinheit 74 eine Gesamtstatistik, gemäß der im Ausführungsbeispiel der Nutzer zwischen 9.00 Uhr und 18.00 Uhr in der Nähe des Telefons 10 ist. Außerhalb dieser Zeit ist der Nutzer nicht in der Nähe des Telefons, so dass in einen Energiesparmodus, Standby geschaltet werden kann. Die Leistungssteuerungseinheit 70 veranlasst das Einschalten des Energiesparmodus bzw. das Ausschalten des Energiesparmodus, siehe beispielsweise Standby-Kommando 84.

Die Granularität für die Statistikeinheiten lässt sich empirisch bestimmen, beispielsweise werden abhängig von der zur Verfügung stehenden Rechenleistung Intervalle, z.B. im Bereich von 5 Minuten bis zu zwei Stunden betrachtet, bzw. im Bereich von 5 Minuten bis 15 Minuten. Tritt innerhalb dieses Intervalls eine Nutzung auf, so wird der Energiesparmodus nicht aktiviert. Tritt dagegen innerhalb dieses Intervalls keine Nutzung auf, so wird der Energiesparmodus in Zukunft aktiviert.

Alternativ oder zusätzlich lässt sich auch eine Vorgabeeinheit 80 in das Verfahren einbeziehen, mit deren Hilfe Zeiten vorgegeben werden, zu denen der Energiesparmodus eingeschaltet werden soll, beispielsweise in Nachtstunden, an Feiertagen, an Wochenenden, bei Urlaub, wie Firmenurlaub oder Urlaub einzelner Mitarbeiter, usw. Die Vorgabeeinheit 80 enthält dafür einen Datenspeicher 81. Die Vorgabeeinheit 80 lässt sich zentral realisieren, beispielsweise als unabhängigen Einheit vom Telefon 10 und von der Telekommunikationsanlage 52. Jedoch kann die Vorgabeeinheit 80 auch in die Telekommunikationsanlage 52 integriert werden. Weiterhin alternativ können die genannten Zeiten auch lokal im Telefon 10 vermerkt werden und dann von der Leistungssteuerungseinheit 70 berücksichtigt werden.

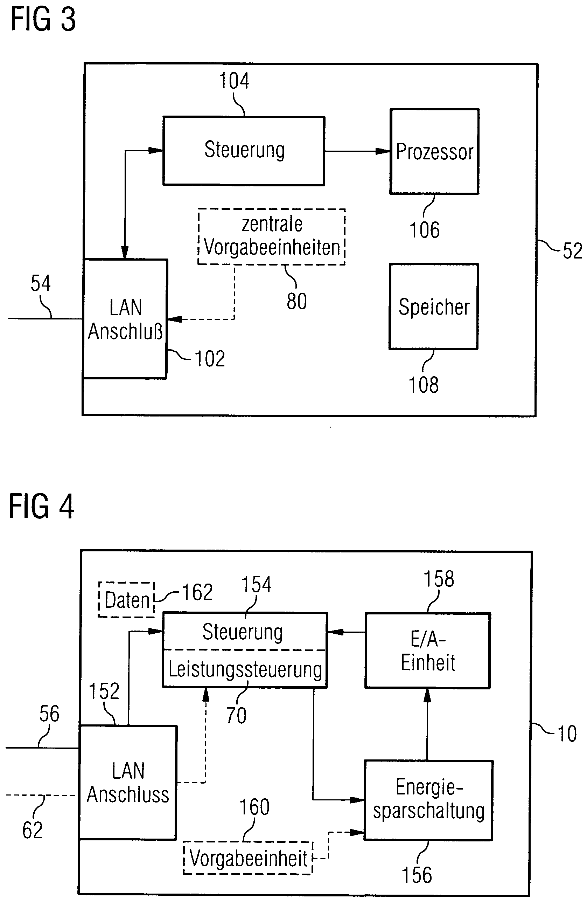

Fig. 3 zeigt Funktionseinheiten der IP-Telekommunikationsanlage 52. Die Telekommunikationsanlage 52 enthält:
- einen LAN-Anschluss 102,
- eine Steuerung 104,
- einen Prozessor 106 und
- einen Speicher 108.

Der Prozessor 106 arbeitet beispielsweise ein Programm ab, das im Speicher 108 gespeichert ist, um die Funktionen der Steuerung 104 zu erbringen. Alternativ kann die Telekommunikationsanlage 52 jedoch auch ausschließlich mit Schaltungsfunktionen, d.h. ohne Verwendung eines Programms ausgeführt werden.

Wenn sich die Leistungssteuerungseinheit 70 im Telefon 10 befindet, hat die Telekommunikationsanlage 52 bezüglich des Energiesparmodus nur einen indirekten Einfluss dahingehend, dass das Telefon 10 an ihr angeschlossen ist und die zur Verfügung stehenden Leistungsmerkmale mit der Steuerung 104 realisiert werden.

Wie bereits erwähnt, kann die zentrale Vorgabeeinheit 80 auch in der Telekommunikationsanlage 52 enthalten sein.

Bei einem alternativen Ausführungsbeispiel kann auch eine IP-Centrex-Lösung verwendet werden, d.h. die Funktionen der Telekommunikationsanlage 52 werden von einer Einheit eines öffentlichen Datenübertragungsnetzes bzw. Telekommunikationsnetzes erbracht, z.B. von einer Vermittlungsstelle.

Fig. 4 zeigt Funktionseinheiten des IP-Telefons 10. Das Telefon 10 enthält:
- einen LAN-Anschluss 152,
- eine Steuerung 154, die ihrerseits die Leistungssteuerung 70 enthalten kann,
- eine Energiesparschaltung 156, und
- eine Ein-/Ausgabeeinheit 158, die auch den Bildschirm 16 enthält.

Der LAN-Anschluss dient u.a. zum Anschluss der Verbindungen 56 bzw. 62. Die Leistungssteuerung 70 arbeitet mit den in Fig. 4 nicht dargestellten Statistikeinheiten 72 bzw. 74 zusammen. Die Ein-/Ausgabeeinheit 158 sendet Daten betreffend Tastendruck und/oder andere Eingaben an die Statistikeinheiten.

Die Leistungssteuerung 70 steuert die Energiesparschaltung 156 abhängig von den Daten, die die Statistikeinheiten 72 und 74 zur Verfügung gestellt haben. Die Energiesparschaltung 156 wirkt ihrerseits direkt auf die Ausgabeeinheit 158, d.h. auf den Bildschirm 16 im Ausführungsbeispiel, ein.

Optional enthält das Telefon 10 auch eine Vorgabeeinheit 160 zur Vorgabe von Zeiträumen, in denen die Energiesparschaltung eingeschaltet werden soll, beispielsweise an Wochenenden, Feiertagen, Urlaub usw.

Die in Fig. 4 gezeigten Funktionen lassen sich beispielsweise mit Hilfe von Software oder ausschließlich unter Verwendung von Hardware erbringen. In Fig. 4 ist außerdem ein Datum 162 gezeigt, das beispielsweise eine Zeitspanne angibt, die angibt, wann in einen Energiesparmodus zu schalten ist, falls innerhalb der Zeitspanne kein Tastendruck bzw. keine andere Nutzung des Telefons 10 erfolgt.

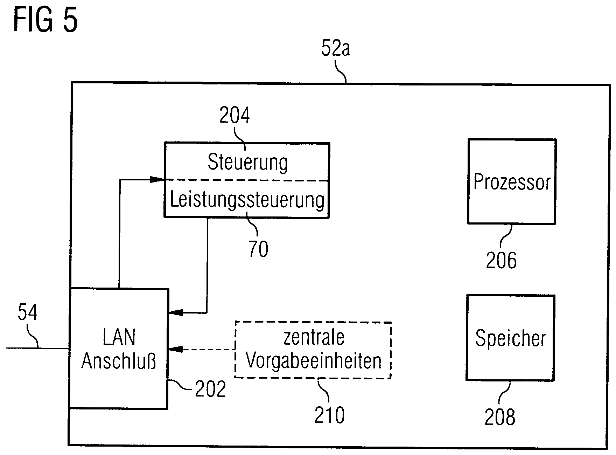

Fig. 5 zeigt Funktionseinheiten einer Telekommunikationsanlage 52a, die wie die Telekommunikationsanlage 52 aufgebaut ist, d.h. einen LAN-Anschluss 202, eine Steuerung 204, einen Prozessor 206 und einen Speicher 208 enthält. Jedoch enthält die Telekommunikationsanlage 52a im Unterschied zur Telekommunikationsanlage 52 die Leistungssteuerung 70 u.a. für das Telefon 10. In diesem Fall ist keine Leistungssteuerung 70 im Telefon 10 enthalten. Auch die Statistikeinheiten 72 und 74 sind in der Telekommunikationsanlage 52 (nicht dargestellt) und nicht im Telefon 10 enthalten. Die Leistungssteuerung 70 steuert das Telefon 10 bzw. die Energiesparschaltung 156 des Telefons 10 direkt über den LAN-Anschluss 202 und die Verbindung 54.

Auch die Telekommunikationsanlage 52a kann optional eine zentrale Vorgabeeinheit 210 enthalten, die der zentralen Vorgabeeinheit 80 in ihrer Funktion entspricht. Die in Fig. 5 gezeigten Funktionseinheiten lassen sich sowohl in Software als auch ausschließlich unter Verwendung von Hardware realisieren.

Bei einem anderen Ausführungsbeispiel wird die Leistungssteuerung 70 sowohl außerhalb der Telekommunikationsanlage 52 bzw. 52a als auch außerhalb des Telefons 10 realisiert. Beispielsweise kann die Leistungssteuerung 70 auf Statistikdaten zugreifen, die an zentraler Stelle ohnehin gespeichert werden, beispielsweise Verbindungszeiten u.ä.

Das Erfassen sehr kurzer Zeiten, in denen kein Tastendruck oder keine Nutzung des Telefons 10 erfolgt, siehe Datum 162 in Fig. 4, lässt sich auch unabhängig von den anderen Energiesparmaßnahmen realisieren. Die Zeit, in der kein Tastendruck erfolgen soll, damit der Energiesparmodus eingeschaltet werden soll, ist beispielsweise kleiner als fünf Minuten oder kleiner als eine Minute, insbesondere größer als 10 Sekunden, 20 Sekunden oder 30 Sekunden.

Weiterhin kann das Berücksichtigen der Datenkommunikation über den Miniswitch unabhängig von den anderen Energiesparmaßnahmen bzw. gemeinsam mit diesen erfolgen. So wird die Energiesparschaltung 156 im Telefon 10 beispielsweise dann eingeschaltet, wenn auch keine Datenübertragung über die Verbindung 62 erfolgt. Die Energiesparschaltung 156 wird ausgeschaltet, wenn wieder eine Datenübertragung über die Verbindung 62 erfolgt.

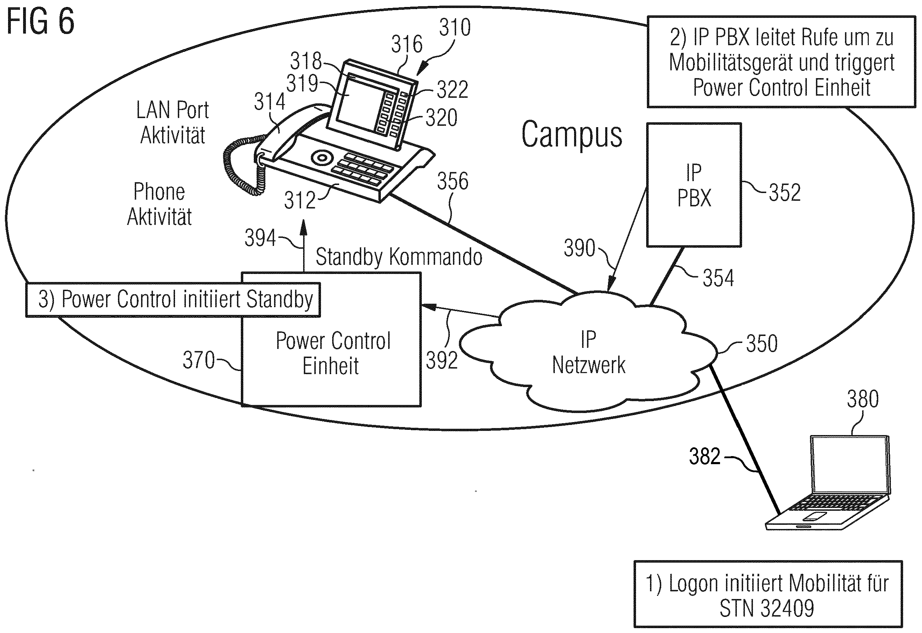

Fig. 6 zeigt Einheiten zum Realisieren eines mobilitätsgesteuerten Energiesparmodus. Ein IP-Telefon 310 umfasst:
- ein Gehäuse 312,
- einen Telefonhörer 314, mit Sprechmuschel und Hörmuschel,
- einen Bildschirm 316.

Auf dem Bildschirm 316 wird beispielsweise eine horizontale Menüleiste 318 abgebildet. Weiterhin wird eine Arbeitsfläche 319 gezeigt. Eine vertikale Menüleiste 320 ist Funktionstasten 322 zugeordnet. Das IP-Telefon 310 lässt sich in einen teilweisen Energiesparmodus und in einen vollständigen Energiesparmodus schalten, wie oben für das IP-Telefon 10 erläutert worden ist.

Das Telefon 310 ist über eine Verbindung 356 an ein IP-Netzwerk 350 angeschlossen, beispielsweise an das lokale Datenübertragungsnetz (LAN) einer Firma. An das Netzwerk 350 ist ebenfalls eine IP-Telekommunikationsanlage 352 angeschlossen, beispielsweise vom Typ HiPath 8000, wobei die im Folgenden erläuterten Funktionen in der Telekommunikationsanlage 352 ergänzt worden sind. Die Telekommunikationsanlage 352 ist über eine Verbindung 354 mit dem IP-Netzwerk 350 verbunden.

Ein Notebook 380 bzw. eine andere Recheneinheit lässt sich wahlweise anstelle des Telefons 310 verwenden, wenn der Nutzer des Telefons 310 nicht im Büro, sondern zu Hause arbeitet, d.h. einen sog. Heimarbeitsplatz nutzt. Das Notebook 380 ist dann über eine Verbindung 382 mit dem Netzwerk 350 verbunden.

In einem Grundzustand ist das Telefon 310 aktiv und an der Telekommunikationsanlage 352 ankommende Rufe werden zum Telefon 310 geleitet. Arbeitet dagegen der Nutzer des Telefons 310 zu Hause, so meldet er sich mit Hilfe des Notebooks 380 bei der Telekommunikationsanlage 352 an. Die Telekommunikationsanlage 352 aktiviert daraufhin eine Rufumleitung, wobei alle an der Telekommunikationsanlage 352 für den.Teilnehmer, der auch das Telefon 310 nutzt, ankommenden Rufe an das Notebook 380 weitergeleitet werden. Es wird vorausgesetzt, dass das Notebook 380 eine Telefonsoftware hat, mit deren Hilfe der Nutzer telefonieren kann.

Im Zusammenhang mit der Einrichtung der Rufumleitung sendet die Telekommunikationsanlage 352 auch eine Signalisierung 390, 392 an eine Leistungssteuerungseinheit 370. Die Leistungssteuerungseinheit 370 schaltet das Telefon 310 in den Energiesparmodus, d.h. beispielsweise wird der Bildschirm 360 ausgeschaltet, siehe Signalisierung 394.

Die Leistungssteuerungseinheit 370 lässt sich in der Vermittlungsstelle 352, als unabhängige Einheit, oder als Bestandteil des IP-Telefons 310 realisieren.

Loggt sich der Nutzer des Notebooks 380 wieder aus, weil er beispielsweise seinen Heimarbeitsplatz verlässt, so leitet die Telekommunikationsanlage 352 alle ankommenden Rufe wieder zu dem Telefon 310. Im Zusammenhang mit dem Deaktivieren der Rufumleitung zum Notebook 380 erzeugt die Telekommunikationsanlage 352 wiederum eine Signalisierung 390, 392 für die Leistungssteuerungseinheit 370. Die Leistungssteuerungseinheit 370 versetzt dann das Telefon 310 abhängig von dieser Signalisierung wieder in einen Betriebszustand, in dem kein Energiesparmodus aktiv ist. Alternativ kann das Einschalten des Bildschirms 316 auch abhängig von einem Tastendruck am Telefon 310 oder von einem ankommenden Ruf am Telefon 310 erfolgen.

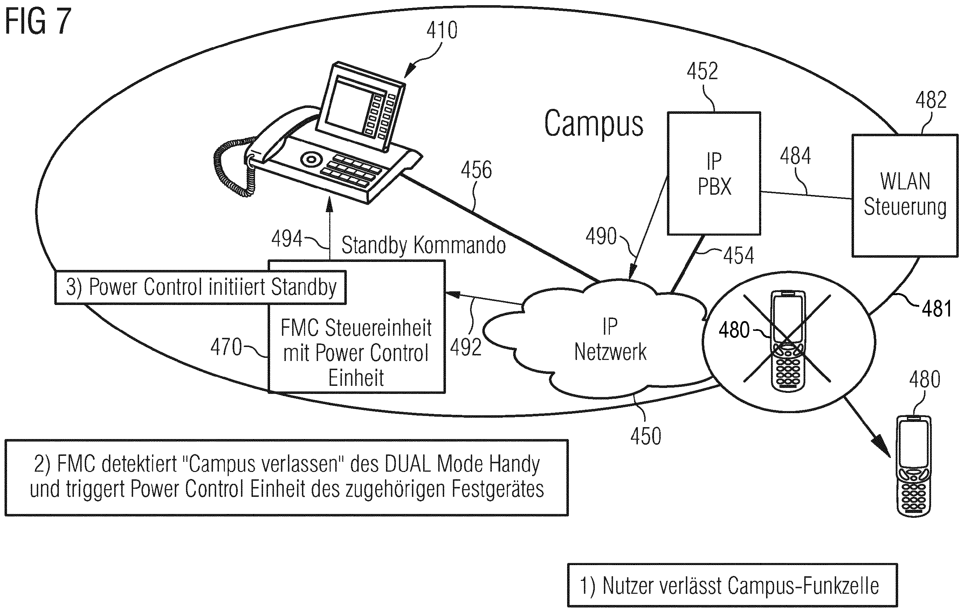

Fig. 7 zeigt Einheiten zum Realisieren eines Energiesparmodus abhängig vom Standort eines dualen Mobiltelefons 480. Das in Fig. 7 dargestellte Szenario bezieht sich beispielsweise auf das Firmengelände einer Firma, das auch als "Campus" bezeichnet werden kann. Auf dem "Campus" befindet sich ein IP-Netzwerk 450, beispielsweise ein LAN. Mit dem Netzwerk 450 ist eine Telekommunikationsanlage 452 verbunden, siehe Verbindung 454. Die Telekommunikationsanlage 452 ist beispielsweise eine Anlage vom Typ HiPath 8000 der Firma Siemens AG.

Weiterhin ist mit dem Netzwerk 450 ein IP-Telefon 410 verbunden, das im Wesentlichen die gleichen Teile wie das Telefon 310 hat. Funktionen der Telekommunikationsanlage 452 und des Telefons 410, die über die üblichen Funktionen hinaus gehen, und den Energiesparmodus betreffen, werden im Folgenden näher erläutert.

Weiterhin gibt es auf dem "Campus" ein WLAN 481, das beispielsweise nur einen Teil des "Campus" abdeckt, oder das den gesamten "Campus" abdeckt. Das WLAN 481 wird von einer WLAN-Steuerung 482 gesteuert. Die WLAN-Steuerung 482 steht über eine Verbindung 484 mit der Telekommunikationsanlage 452 in Verbindung. Die Verbindung 484 ist beispielsweise Bestandteil des Netzwerks 450.

In einem Grundzustand, in dem das Telefon 410 beispielsweise keinen aktiven Energiesparmodus hat, befindet sich der Nutzer mit eingeschaltetem Mobiltelefon 480 auf dem "Campus". Dies wurde der Telekommunikationsanlage 452 von der WLAN-Steuerung 482 mitgeteilt. Verlässt dagegen der Nutzer des Telefons 410 und des dualen Mobiltelefons den "Campus", wobei er das Telefon 480, nicht jedoch das Telefon 410 mitnimmt, so wird dies durch die WLAN-Steuerung 482 erfasst, weil sie keinen Kontakt mehr zu dem Mobiltelefon 480 hat. Der Nutzer kann das Mobiltelefon 480 beispielsweise über ein öffentliches Mobilfunknetz weiter nutzen, weil für ihn ankommende Rufe entsprechend umgeleitet werden, z.B. in ein Mobilfunknetz.

Die WLAN-Steuerung 482 teilt der Telekommunikationsanlage 452 mit, dass sich das Mobiltelefon 480 nicht mehr im Bereich des WLAN 481 und damit nicht mehr im Bereich des "Campus" befindet. Daraufhin signalisiert die Telekommunikationsanlage 452 an eine Leistungssteuereinheit 470 (FMC-Steuereinheit, Fixed Mobile Convinience - wahlweise bzw. verfügbarkeitsabhängige Nutzung von "Dual Mode" Geräten, z.B. WLAN/GSM), dass der Energiesparmodus eingeschaltet werden kann, siehe Signalisierung 490 und 492. Die Leistungssteuereinheit 470 signalisiert darauf hin mit Hilfe einer Signalisierung 494 an das Telefon 410, dass die Energiesparschaltung eingeschaltet werden soll, d.h. ein dem Bildschirm 316 entsprechenden Bildschirm des Telefons 410 wird beispielsweise ausgeschaltet oder dunkler geschaltet.

Die Leistungssteuereinheit 470 lässt sich als Bestandteil der Telekommunikationsanlage 452, als unabhängige Einheit bzw. als Bestandteil des Telefons 410 realisieren.

Betritt der Nutzer wieder den "Campus", so wird dies vom WLAN 481 erfasst und an die WLAN-Steuerung 482 gemeldet. Die WLAN-Steuerung 482 signalisiert das Eintreffen des Nutzers an die Telekommunikationsanlage 452, die daraufhin beispielsweise den Energiesparmodus wieder beendet, siehe Signalisierung 490, 492, 494. Jedoch lässt sich das Einschalten des Telefons 410 auch auf andere Art und Weise realisieren, beispielsweise erst bei einem Tastendruck am Telefon 410 oder bei einem für das Telefon ankommenden Ruf.

Die beiden in Fig. 6 und 7 gezeigten Maßnahmen lassen sich auch in Kombination in einer Telekommunikationsanlage 452 realisieren, so dass dann der Energiesparmodus abhängig von der Nutzung eines Heimarbeitsplatzes und abhängig vom Verlassen des Firmengeländes eingeschaltet wird.

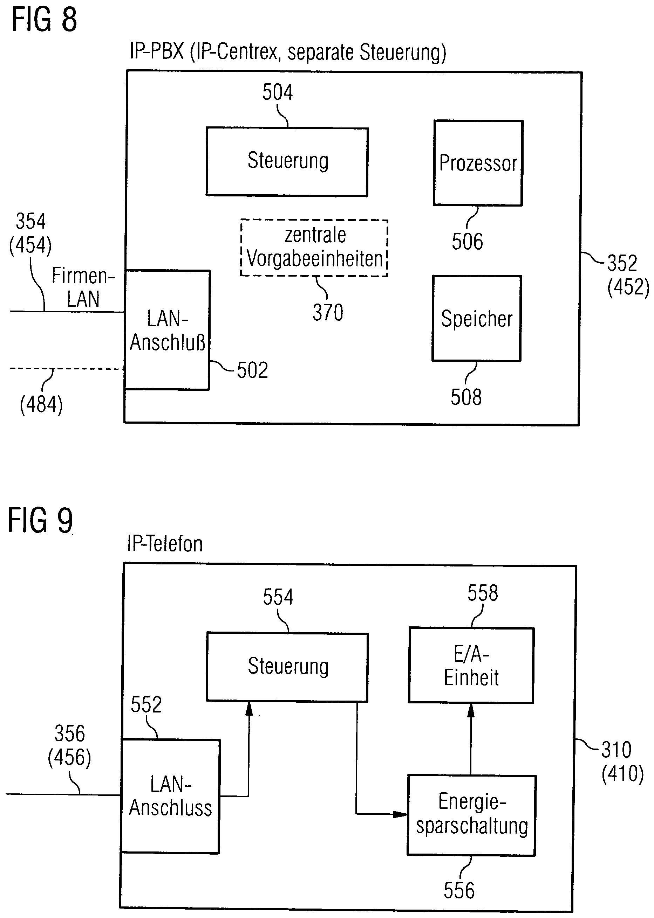

Fig. 8 zeigt Funktionseinheiten der Telekommunikationsanlage 352. Die Telekommunikationsanlage 352 enthält:
- einen LAN-Anschluss 502, der mit der Verbindung 454 verbunden ist,
- eine Steuerung 504,
- einen Prozessor 506, und
- einen Speicher 508.

Die Steuerung 504 wird beispielsweise mit Hilfe eines im Speicher 508 gespeicherten Programms realisiert, das durch einen Prozessor 506 abgearbeitet wird. Alternativ lassen sich die Funktionen der Steuerung 504 jedoch auch ohne Nutzung eines Programms erbringen.

Die Steuerung 504 erbringt die Grundfunktionen der Telekommunikationsanlage. Außerdem erbringt die Steuerung 504 die anhand der Figur 6 erläuterten Funktionen im Zusammenhang mit der Aktivierung bzw. der Aktivierung des Energiesparmodus für das Telefon 310.

Zu den Grundfunktionen der Telekommunikationsanlage 352 gehört der Anschluss einer Vielzahl von Telefonen des Firmennetzes, das Erbringen von Leistungsmerkmalen wie Rufumleitung, Konferenzschaltung sowie auch das Verwalten von firmeninternen Rufnummern für diese Telefone. Die Leistungssteuerungseinheit 370 befindet sich optional ebenfalls in der Telekommunikationsanlage 352.

Die Funktionen der Telekommunikationsanlage 352 lassen sich jedoch auch in einer IP-Centrex-Lösung in einer Einheit eines öffentlichen Datenübertragungsnetzes oder eines öffentlichen Telekommunikationsnetzes erbringen. Alternativ können die auf den Energiesparmodus bezogenen Steuerfunktionen auch in einer unabhängigen Einheit erbracht werden, d.h. unabhängig von der Telekommunikationsanlage 352 bzw. dem Telefon 310.

Die Telekommunikationsanlage 452 hat die gleichen Einheiten wie die Telekommunikationsanlage 352. Jedoch steht sie noch über die Verbindung 484 mit der WLAN-Steuerung 482 in Verbintung.

Fig. 9 zeigt die Funktionseinheiten des IP-Telefons 310 bzw. 410. Das Telefon 310 bzw. 410 enthält:
- einen LAN-Anschluss 552,
- eine Steuerung 554,
- eine Energiesparschaltung 556, und
- eine Ein-/Ausgabeeinheit 558.

Die Steuerung 554 erbringt die Grundfunktionen des Telefons 310 bzw. 410, beispielsweise unter Verwendung eines Prozessors und eines Programms, das in einen Speicher des Telefons 310 bzw. 410 gespeichert ist. Außerdem erbringt das Telefon 310 bzw. 410 die oben im Zusammenhang mit der Fig. 6 bzw. der Fig. 7 erläuterten Funktionen im Zusammenhang mit der Einschaltung bzw. der Ausschaltung des Energiesparmodus. Der Energiesparmodus wird mit Hilfe der Energiesparschaltung 556 geschaltet, wobei die Energiesparschaltung 556 direkt die Ein-/Ausgabeeinheit 558 steuert, d.h. insbesondere die Anzeigeeinheit 316 des Telefons 310 bzw. eine Anzeigeeinheit des Telefons 410.

Die IP-Telefone 10, 310, 410 sind vorzugsweise über Kabel an das betreffende IP-Netzwerk angeschlossen. Außerdem gibt es ggf. noch ein Netzkabel, das bspw. zu einem Netztransformator führt, der in eine Steckdose oder Steckerleiste gesteckt werden kann. Die Telefone, Vorrichtungen und Telekommunikationsanlagen lassen sich mit Software oder auch nur mit Hardware realisieren.

Mit anderen Worten ausgedrückt, wird ein Verfahren zur automatisierten Senkung des Energieverbrauchs bei IP-Endgeräten angegeben. IP-Endgeräte haben bedingt durch die verwendete Technologie bzw. die Anforderungen an hoch auflösende Grafikdarstellungen einen hohen Energieverbrauch, Prozessor und Schnittstellen.

Mit Kabeln angeschlossene Telefone haben üblicherweise anders als Personalcomputer keinen Standby-Mode, da Telefone aus der technischen Tradition heraus immer vollständig betriebsfähig gehalten werden.

Die beschriebene Lösung zeigt die Möglichkeit eines reduzierten Energieverbrauchs auch in den Zeiten, in denen das IP-Endgerät nicht genutzt wird. Hierzu wird eine Auswertung der Benutzeroberfläche und des Datenstroms des IP-Endgeräts herangezogen:
- a) Auswertung über Benutzeroberfläche: Sobald der Benutzer, konfigurierbar über das Menü "Einstellungen", eine bestimmte Zeit keine Funktionen über die Bedienoberfläche bzw. von einem Personalcomputer aus an das IP-Endgerät anwählt, bzw. steuert, geht der Bildschirm in zuerst einen Energiesparmodus, in welchem die Leistung der Helligkeit zurückgenommen wird, und nach einer wieder vom Benutzer festgelegten Zeit schaltet das Endgerät den Bildschirm ab. Wenn durch eine Bedienung am Endgerät bzw. über den angeschlossenen Personalcomputer eine Funktion des IP-Endgeräts angewählt wird, schaltet der Bildschirm wieder automatisch in denen Anzeigemodus.

- b) Auswertung über den Datenstrom des IP-Endgeräts: Sobald das IP-Endgerät oder ein damit verbundenes Endgerät einen Datenstrom verarbeitet wird (z.B. bei einem Telefonat, beim Surfen im Internet, beim Download von Informationen etc.) der Bildschirm automatisch in den Anzeigemodus geschaltet.
- c) Gewohnheitsautomatik: Auswertung von statistisch erfassten Zeiten abgeleitet aus dem Benutzerverhalten des Endanwenders. Hierzu ermittelt eine entweder im Gerät oder in einer zentralen Einheit lokalisierten Einheit das bisherige Benutzerverhalten und schaltet das Gerät abgeleitet aus den Erfahrungswerten in Betriebsmodus oder Standbymodus (z.B. bei einem Büroarbeitsplatz, bei dem aktives Benutzerverhalten zwischen 8.00 Uhr und 18.00 Uhr festgestellt wurde, wird der Standby-Mode abgeleitet aus dem Benutzerverhalten zwischen 18.10 Uhr und 7.50 Uhr automatisch aktiviert).
- d) Optional kann eine zentrale Einrichtung Endgeräte einer bestimmten Gruppe in den Ruhezustand setzen. Dieses ist besonders in Nachtstunden, an Feiertagen und an Wochenenden sinnvoll.

Erreicht wird eine beachtliche Reduzierung der Energieaufnahme von IP-Endgeräten während Zeiten, in denen das IP-Endgerät nicht genutzt wird. Wenn von einer durchschnittlichen Nutzungsdauer von vier Stunden pro Tag ausgegangen wird, dann wäre das eine Energieeinsparung von ca. 84 Prozent pro Endgerät. Wird eine Energieaufnahme von 6 Wh (Wattstunden) zugrunde gelegt, so lassen sich bei 20 Stunden Standby 120 Wh (Wattstunden) pro Tag und Endgerät einsparen.

Durch die unter c) beschriebene Gewohnheitsautomatik sind die für den Benutzer spürbaren Auswirkungen des Energiesparmodus minimal.

Endgeräte können mit der Energiesparautomatik ausgerüstet werden oder die Energiesparautomatik kann als zentrale Einrichtung bereitgestellt werden, beispielsweise in einer Telekommunikationsanlage.

Mit anderen Worten gilt weiterhin, dass ein Verfahren zur mobilitätsgesteuerten Reduzierung des Energieverbrauchs stationärer IP-Kommunikationsgeräte angegeben wird. Die IP-Endgeräte haben bedingt durch die verwendete Technologie bzw. Anforderungen an hoch auflösende Grafikdarstellungen einen hohen Energieverbrauch für Display, Prozessor und Schnittstellen. Zeitgleich steigen die Mobilitätsanforderungen heutiger Benutzer. Folge dieser Entwicklung ist es, dass bei Nutzung von Mobilitätsfunktionen wie z.B. die Nutzung eines IP-Soft-Clients mit gleicher Rufnummer wie ein Telefon - oder die Integration eines dualen Mode-Mobiltelefons (z.B. Siemens-Lösung "mobile Connect") die Abwesenheit eines Nutzers einer IP-Kommunikationseinrichtung den zeitgleiches Betrieb eines IP-Telefons überflüssig macht.

Wiederum gilt, dass Telefone üblicherweise anders als Personalcomputer keinen Standby-Mode haben, da diese aus der technischen Tradition heraus immer voll betriebsfähig gehalten werden. Das heißt, während der eindeutigen Nutzung von Mobilitätsfunktionen durch den Endbenutzer läuft das IP-Endgerät mit vollem Stromverbrauch im Büro weiter.

Die beschriebene Lösung zeigt die Möglichkeit eines reduzierten Energieverbrauchs in den Zeiten, in denen zeitgleich eine Mobilitätsfunktion genutzt wird:
- a) HFA (HiPath Feature Access) Mobilität: Hier besitzt der User einen IP-Soft-Client, der mit der gleichen Rufnummer wie das fest installierte Telefon arbeitet. Wird der Soft-Client gestartet, erfolgt üblicherweise eine Information an das Kommunikationssystem mit der Folge, der Umleitung bzw. der vermittlungstechnischen Abschaltung des stationären Endgeräts (HFA-Logoff). Selbstverständlich können anstelle einer HiPath-Telekommunikationsanlage auch andere Telekommunikationsanlagen zum Einsatz kommen.
- b) Fixed-Mobile-Convenience: Hier besitzt der Nutzer zusätzlich zu seinem stationären IP-Endgerät beispielsweise ein Dual-Mode-Mobiltelefon. Eine Auswerteeinheit erkennt, ob sich das Mobiltelefon Off-Campus (GSM/UMTS) bzw. On-Campus befindet und steuert die Anrufe entsprechend über WLAN oder ein öffentliches Mobilfunknetz.

Grundlage der angegebenen Lösung ist es, die aus der Mobilitätsnutzung gewonnene Standortinformation des Benutzers über eine Auswertereinheit zu verarbeiten und neben der vermittlungstechnischen Schaltung des Gesprächs auch eine Schaltfunktion an das in dieser Zeit unbenutzte IP-Endgerät weiterzuleiten, welches daraufhin auch bezüglich des Stromverbrauchs in einen Standbymodus fährt.

Die Auswertereinheit würde einem stationäres Endgerät z.B. bei folgenden Ereignissen den Schaltbefehl Standby senden: (1) Anmelden des Soft-Clients, (2) Verlassen des Campusgeländes (WLAN-Funkbereich), (3) Verlassen des als "Heimatfunkzelle" definierten WLAN Voice Over IP Access Points.

Wiederum ergeben sich erhebliche Energieeinsparungen durch Abschaltung nicht genutzter IP-Telefone und der darin befindlichen Peripherie und gegebenenfalls LAN-Ports.

## Patentansprüche

1. Verfahren zum Steuern des Energieverbrauchs eines Telefons, wobei für das Telefon automatisch ein Energiesparmodus eingeschaltet oder ausgeschaltet wird, abhängig von mindestens einer vorgegebenen Zeitspanne, innerhalb der das Telefon voraussichtlich nicht benutzt wird, wobei das Telefon als ein IP-Telefon (10; 310; 410) in einem LAN-Netzwerk (50; 350; 450) ausgebildet ist, wobei erste Daten erzeugt werden, durch die die vorgegebene Zeitspanne auf der Grundlage einer statistischen Auswertung (72, 74) über ein bisheriges Nutzungsverhalten eines Benutzers des IP-Telefons (10) bestimmt wird, abhängig von:
- Bedieneingaben, insbesondere durch Tastendruck, des Benutzers, an dem IP-Telefon (10; 310; 410) und/oder
- ankommenden Daten für das IP-Telefon (10; 310; 410) und/oder
- Aktivitäten eines mit dem IP-Telefon (10) verbundenen Endgeräts (60),
wobei aus den ersten Daten automatisch bestimmet wird, wann das IP-Telefon (10; 310; 410) voraussichtlich nicht benutzt wird, und für das IP-Telefon (10; 310; 410) automatisch der Energiesparmodus für den bestimmten Zeitraum eingeschaltet wird, wobei zweite Daten (81) vorgegeben werden, die angeben, wann das IP-Telefon (10) voraussichtlich nicht benutzt wird, wobei das IP-Telefon (10) automatisch abhängig von den vorgegebenen Daten (81) in einen Energiesparmodus geschaltet bzw. der Energiesparmodus beendet wird,und wobei das IP-Telefon (310; 410) von einem Nutzer wahlweise anstelle eines Endgeräts (380; 480) nutzbar ist, wobei eine automatische Erfassung der Nutzung des Endgeräts (380; 480) durchgeführt wird,
und wobei für das IP-Telefon (310; 410) automatisch der Energiesparmodus eingeschaltet und/oder ausgeschaltet wird abhängig von der erfassten Nutzung des Endgeräts (380; 480), wobei das Endgerät (380; 480) eine Verbindung zu einer Telekommunikationsanlage (352; 452) aufbaut, an der auch das IP-Telefon (310; 410) betrieben wird, und
wobei sich das Endgerät (380; 480) bei der Telekommunikationsanlage (352; 452) anmeldet.

2. Verfahren zum Steuern des Energieverbrauchs eines Telefons, wobei für das Telefon automatisch ein Energiesparmodus eingeschaltet oder ausgeschaltet wird, abhängig von mindestens einer vorgegebenen Zeitspanne, innerhalb der das Telefon voraussichtlich nicht benutzt wird, wobei das Telefon als ein IP-Telefon (10; 310; 410) in einem LAN-Netzwerk (50; 350; 450) ausgebildet ist, wobei erste Daten erzeugt werden, durch die die vorgegebene Zeitspanne auf der Grundlage einer statistischen Auswertung (72, 74) über ein bisheriges Nutzungsverhalten eines Benutzers des IP-Telefons (10) bestimmt wird, abhängig von:
- Bedieneingaben, insbesondere durch Tastendruck, des Benutzer, an dem IP-Telefon (10; 310; 410) und/oder
- ankommenden Daten für das IP-Telefon (10; 310; 410) und/oder
- Aktivitäten eines mit dem IP-Telefon (10) verbundenen Endgeräts (60),
wobei aus den ersten Daten automatisch bestimmet wird, wann das IP-Telefon (10; 310; 410) voraussichtlich nicht benutzt wird, und für das IP-Telefon (10; 310; 410) automatisch der Energiesparmodus für den bestimmten Zeitraum eingeschaltet wird und wobei zweite Daten (81) vorgegeben werden, die angeben, wann das IP-Telefon (10) voraussichtlich nicht benutzt wird, wobei das IP-Telefon (10) automatisch abhängig von den vorgegebenen Daten (81) in einen Energiesparmodus geschaltet bzw. der Energiesparmodus beendet wird, und wobei ein Endgerät (480) eines Datenübertragungsnetzes (481) wie etwa eines Funk-Datenübertragungsnetzes, insbesondere eines WLAN, vorgesehen ist,
wobei eine Steuereinheit (482) des Datenübertragungsnetzes (481) eine Verbindung zu einer Telekommunikationsanlage (452) aufbaut, an der auch das IP-Telefon (410) betrieben wird,
und wobei der Telekommunikationsanlage (452) von der Steuereinheit (482) mindestens ein Datum übermittelt wird,
und wobei abhängig von dem übermittelten Datum für das IP-Telefon (410) der Energiesparmodus ein- oder ausgeschaltet wird, wobei das mindestens eine Datum angibt, dass das Endgerät (480) außerhalb des Bereichs ist, in dem das IP-Telefon (410) angeschlossen ist.

3. Verfahren nach Anspruch 1 oder 2, wobei das automatische Bestimmen im IP-Telefon (10) oder an einer zentralen Stelle oder in einer unabhängigen Einheit durchgeführt wird.

4. Verfahren nach einem der vorhergehenden Ansprüche, wobei die vorgegebenen zweiten Daten (81) durch vorgegebene Zeiten, nämlich kalendarische und/oder tageszeitliche Vorgaben, die beispielsweise Betriebsferien, Wochenenden, Feiertage, Urlaubstage und/oder Nachtzeiten betreffen, festgelegt sind und vorzugsweise zentral für mehrere IP-Telefone (10) vorgegeben werden.

5. Verfahren nach Anspruch 4, wobei die vorgegebenen zweiten Daten in einer unabhängigen Einheit oder an einer zentralen Stelle oder im IP-Telefon gespeichert sind bzw. werden.

6. Verfahren nach einem der vorhergehenden Ansprüche, wobei in dem Energiesparmodus die Helligkeit einer Anzeigeeinheit (16) des IP-Telefons (10) verringert wird und/oder die Anzeigeeinheit (16) ausgeschaltet wird.

7. Verfahren nach einem der vorhergehenden Ansprüche, wobei das IP-Telefon (10) mit einem Endgerät (60) des LAN-Netzwerks (50) über eine in dem IP-Telefon (10) als sogenannten Miniswitch vorhandene Datenpaketweiterleitungseinrichtung gekoppelt ist,
wobei für das IP-Telefon (10) automatisch ein Energiesparmodus eingeschaltet oder ausgeschaltet wird abhängig von einem Datenstrom von oder zu dem Endgerät (60).

8. Verfahren nach einem der Ansprüche 2 bis 7, wobei das Endgerät (480) auch als Endgerät eines Mobilfunknetzes betrieben wird, insbesondere eines GSM-Netzes, eines UMTS-Netzes oder eines LTE-Netzes.

9. Verfahren nach Anspruch 7 wobei die Telekommunikationsanlage (352, 452) das Schalten des Energiesparmodus abhängig von dem Datenstrom von oder zu dem Endgerät (380, 480) bzw. abhängig von dem übermittelten Datum veranlasst.

10. Telekommunikationsanlage (352) umfassend:
eine Steuereinrichtung (504), die Einheiten zur Durchführung eines Verfahrens zum Steuern des Energieverbrauchs eines IP-Telefons (10; 310; 410) nach einem der Ansprüche 1 oder 2 aufweist;
die Steuereinrichtung (504) umfassend:
eine Leistungssteuerungseinheit (70; 370; 470), die ein IP-Telefon (10; 310; 410)) automatisch in den Energiesparmodus schaltet abhängig von mindestens einer vorgegebenen Zeitspanne, in der das IP-Telefon (10; 310; 410) voraussichtlich nicht genutzt wird,
wobei die Steuereinheit verbunden oder versehen ist mit
- einer ersten Statistikeinheit (72) zur statistischen Auswertung über Nutzungszeiten des IP-Telefons (310), und/oder
- einer zweiten Statistikeinheit (74) zur statistischen Auswertung über Aktivitäten eines mit dem IP-Telefon (310) verbundenen Endgeräts (60), und/oder
- einer Vorgabeeinheit (370) zum Vorgeben von kalendarischen und/oder tageszeitlichen Vorgaben;
um daraus mindestens eine vorgegebene Zeitspanne zu bestimmen, innerhalb der das IP-Telefon (10; 310; 410) voraussichtlich nicht genutzt wird;
wobei die Leistungssteuerungseinheit (370; 470) eine Gesamtstatistik aus den Statistikdaten der ersten Statistikeinheit (72) und/oder der zweiten Statistikeinheit (74) erzeugt und das Einschalten und/oder Ausschalten des Energiesparmodus veranlasst,
wobei die Steuereinrichtung (504) die alternative Nutzung eines an der Telekommunikationsanlage (352) angeschlossenen IP-Telefons (310; 410) und eines weiteren Endgeräts (380) ermöglicht und
wobei die Steuereinrichtung (504, 370) so aufgebaut ist, dass für das IP-Telefon (310; 410) abhängig von der Nutzung des weiteren Endgeräts (380) das Einschalten und/oder Ausschalten eines Energiesparmodus veranlasst wird.

11. Telekommunikationsanlage (452), umfassend:
eine Steuereinrichtung (504), die Einheiten zur Durchführung eines Verfahrens zum Steuern des Energieverbrauchs eines IP-Telefons (410) nach einem der Ansprüche 1 oder 2 aufweist;
die Steuereinrichtung (504) umfassend:
eine Leistungssteuerungseinheit (470), die ein IP-Telefon (410)) automatisch in den Energiesparmodus schaltet abhängig von mindestens einer vorgegebenen Zeitspanne, in der das IP-Telefon (410) voraussichtlich nicht genutzt wird,
wobei die Steuereinheit verbunden oder versehen ist mit
- einer ersten Statistikeinheit (72) zur statistischen Auswertung über Nutzungszeiten des IP-Telefons (410) , und/oder
- einer zweiten Statistikeinheit (74) zur statistischen Auswertung über Aktivitäten eines mit dem IP-Telefon (410) verbundenen Endgeräts (60), und/oder
- einer Vorgabeeinheit (370) zum Vorgeben von kalendarischen und/oder tageszeitlichen Vorgaben;
um daraus mindestens eine vorgegebene Zeitspanne zu bestimmen, innerhalb der das IP-Telefon (410) voraussichtlich nicht genutzt wird;
wobei die Leistungssteuerungseinheit (470) eine Gesamtstatistik aus den Statistikdaten der ersten Statistikeinheit (72) und/oder der zweiten Statistikeinheit (74) erzeugt und das Einschalten und/oder Ausschalten des Energiesparmodus veranlasst;.
wobei die Steuereinrichtung (504) die Nutzung eines an der Telekommunikationsanlage (452) angeschlossenen IP-Telefons (410) ermöglicht und eine Schnittstelle (484) zu einem Funk-Datenübertragungsnetz (481) für ein Endgerät (480) verwendet, das vom Nutzer des IP-Telefons (410) genutzt wird,
wobei die Steuereinrichtung (504) so aufgebaut ist, dass sie für das IP-Telefon (410) das Einschalten und/oder das Ausschalten des Energiesparmodus veranlasst abhängig vom Empfang eines Datums von dem Datenübertragungsnetz (481) in der Telekommunikationsanlage (452), und
wobei das Datum vom Standort des Endgeräts (480) abhängt.

## Claims

1. A Method for controlling power consumption of a telephone, wherein a power saving mode is automatically turned on or off for the telephone, depending on at least one predetermined period of time, in which the telephone is expected not to be used,
wherein the telephone is formed as an IP telephone (10; 310; 410) in a LAN network (50; 350; 450),
wherein first data is being generated, by means of which the predetermined period of time is determined based on a statistical evaluation (72, 74) of a previous usage behavior of a user of the IP telephone (10), depending on:
- control inputs, in particular via key stroke, of the user at the IP telephone (10; 310; 410) and/or
- incoming data for the IP telephone (10; 310; 410) and/or
- activities of a terminal (60) connected to the IP telephone (10),
wherein the first data is used to automatically determine, when the IP telephone (10; 310; 410) is expected not to be used and the power saving mode is automatically turned on for the IP telephone (10; 310; 410) during the determined period of time, wherein second data (81), indicating when the IP telephone (10) is expected not be used, is being predetermined, wherein the IP telephone (10) is automatically switched to a power saving mode and/or the power saving mode is switched off, depending on the predetermined data (81), and
wherein a user may elect to use the IP telephone (310; 410) instead of a terminal (380; 480),
wherein automatic detection of the use of the terminal (380; 480) is performed,
and wherein the power saving mode is automatically switched on and/or switched off for the IP telephone (310; 410) depending on the detected use of the terminal (380; 480), wherein the terminal (380; 480) establishes a connection with a telecommunication system (352; 452) at which the IP telephone (310; 410) is also operated, and
wherein the terminal (380; 480) registers with the telecommunication system (352; 452).

2. A method for controlling power consumption of a telephone, wherein a power saving mode is automatically switched on or switched off for the telephone, depending on at least one predetermined period of time, in which the telephone is expected not be used,
wherein the telephone is formed as an IP telephone (10; 310; 410) within a LAN network (50; 350; 450),
wherein first data is generated, by means of which the predetermined period of time is determined based on a statistical evaluation (72; 74) regarding a previous usage behavior of a user of the IP telephone (10), depending on:
- control inputs, in particular via key strokes, of the user at the IP telephone (10; 310; 410) and/or
- incoming data for the IP telephone (10; 310; 410) and/or
- activities of a terminal (60) connected to the IP telephone (10),
wherein the first data is used to automatically determine, when the IP telephone (10; 310; 410) is expected not to be used and the power saving mode is automatically switched on for the IP telephone (10; 310; 410) during the predetermined period of time and
wherein second data (81) is predetermined which indicates when the IP telephone (10) is expected not to be used, wherein the IP telephone (10) is automatically switched into a power saving mode and/or the power saving mode is automatically switched off, depending on the predetermined data (81), and
wherein a terminal (480) of a data transmission network (481) such as a radio data transmission network, in particular WLAN, is provided,
wherein a control unit (482) of the data transmission network (481) establishes a connection to a telecommunication system (452), at which the IP telephone (410) is also operated,
and wherein at least one date is transmitted to the telecommunication system (452) by the control unit (482),
and wherein depending on the transmitted date the power saving mode is switched on or off for the IP telephone (410), wherein the at least one date indicates that the terminal (480) is outside of the area with which the IP telephone (410) is linked.

3. The method according to claim 1 or 2, wherein the automatic determination is performed at the IP telephone (10) or at a central point or at an independent unit.

4. The method according to any of the previous claims, wherein the predetermined second data (81) is determined by predetermined periods of time, namely calendrical and/or diurnal specifications, which concern for instance company holidays, weekends, public holidays, vacation days and/or night times and are preferably determined centrally for multiple IP telephones (10).

5. The method according to claim 4, wherein the predetermined second data is and/or is being stored on an independent unit or at a central point or on the IP telephone.

6. The method according to any of the previous claims, wherein the brightness of the display unit (16) of the IP telephone (10) is reduced and/or the display unit (16) is switched off during the power saving mode.

7. The method according to any of the previous claims, wherein the IP telephone (10) is coupled to a terminal (60) of the LAN network (50) via a data packet forwarding device, which is present in the IP telephone as a so called mini-switch, wherein a power saving mode is automatically switched on or off for the IP telephone (10), depending on a data flow from or to the terminal (60).

8. The method according to any of claims 2 to 7, wherein the terminal (480) is also operated as the terminal of a mobile telecommunications network, in particular of a GSM network, a UMTS network or an LTE network.

9. The method according to claim 7, wherein the telecommunication system (352; 452) causes the switching of the power saving mode depending on the data flow to or from the terminal (380, 480) and/or depending on the transmitted date.

10. A telecommunication system (352) comprising:
a control means (504) having units for performing a method for controlling power consumption of an IP telephone (10; 310; 410) according to any of claims 1 or 2;
the control means (504) comprising:
a power control unit (70; 370; 470) which automatically switches an IP telephone (10; 310; 410) into the power saving mode depending on at least one predetermined period of time, in which the IP telephone (10; 310; 410) is expected not to be used,
wherein the control unit is connected to or equipped with
- a first statistical unit (72) for the statistical evaluation regarding usage times of the IP telephone (310), and/or
- a second statistical unit (74) for the statistical evaluation regarding the activities of a terminal (60) which is connected to the IP telephone (310), and/or
- a predetermination unit (370) for predetermination of calendrical and/or diurnal specifications;
to determine at least one predetermined period of time therefrom during which the IP telephone (10; 310; 410) is expected not to be used;
wherein the power control unit (370; 470) generates overall statistics from the statistical data of the first statistical unit (72) and/or the second statistical unit (74) und causes the power saving mode to be switched on and/or switched off,
wherein the control means (504) enable the alternative use of an IP telephone (310; 410) which is connected to the telecommunication system (352) and of another terminal (380), and
wherein the control means (504, 370) is configured such that the switching on and/or switching off of a power saving mode is caused for the IP telephone (310; 410) dependent of the use of the other terminal (380).

11. A telecommunication system (452), comprising:
a control means (504) having units for performing the method for controlling power consumption of an IP telephone (410) according to any of claims 1 or 2;
the controlling means (504) comprising:
a power control unit (470), which automatically switches an IP telephone (410) into the power saving mode, depending on at least one predetermined period of time, in which the IP telephone (410) is not expected to be used,
wherein the control unit is connected to or equipped with
- a first statistical unit (72) for statistical evaluation regarding usage times of the IP telephone (410), and/or
- a second statistical unit (74) for statistical evaluation regarding activities of a terminal (60) connected to the IP telephone (410) and/or
- a predetermination unit (370) for predetermination of calendrical and/or diurnal specifications;
to determine thereof at least one predetermined period of time, in which the IP telephone (410) is not expected to be used;
wherein the power control unit (470) generates overall statistics from the statistical data from the first statistical unit (72) and/or the second statistical unit (74) and causes the power saving mode to be switched on and/or switched off;
wherein the control means (504) enable the use of the IP telephone (410) which is connected to the telecommunication system (452) and use an interface (484) to a radio data transmission network (481) for a terminal (480), which is used by the user of the IP telephone (410),
wherein the control means (504) is composed such that it causes the power saving mode for the IP telephone (410) to be switched on and/or switched off, depending on the reception of a date from the data transmission network (481) in the telecommunication system (452), and
wherein the date depends on the location of the terminal (480).

## Revendications

1. Procédé de commande de la consommation d'énergie d'un téléphone, dans lequel, pour le téléphone, est activé ou désactivé automatiquement un mode d'économie d'énergie, en fonction d'au moins un laps de temps spécifié à l'intérieur duquel le téléphone ne sera probablement pas utilisé,
dans lequel le téléphone est conçu en tant que téléphone IP (10 ; 310 ; 410) dans un réseau LAN (50 ; 350 ; 450),
dans lequel des premières données sont générées par lesquelles le laps de temps spécifié est déterminé sur la base d'une évaluation statistique (72, 74) sur un comportement d'utilisation qu'a eu jusqu'à présent un utilisateur du téléphone IP (10) en fonction :
- d'entrées de commande, en particulier par le biais d'appui de touches, de l'utilisateur, au niveau du téléphone IP (10 ; 310 ; 410) et/ou
- de données entrantes pour le téléphone IP (10 ; 310 ; 410) et/ou
- d'activités d'un terminal (60) relié au téléphone IP (10), dans lequel à partir des premières données il est déterminé automatiquement quand le téléphone IP (10 ; 310 ; 410) ne sera probablement pas utilisé et quand le mode d'économie d'énergie sera automatiquement activé pour le téléphone IP (10 ; 310 ; 410) pendant la période de temps déterminée,
dans lequel sont spécifiées des secondes données (81) qui indiquent quand le téléphone IP (10) ne sera probablement pas utilisé, dans lequel le téléphone IP (10) est activé automatiquement en fonction des données spécifiées (81) dans un mode d'économie d'énergie ou le mode d'économie d'énergie est terminé, et
dans lequel le téléphone IP (310 ; 410) est utilisable par un utilisateur au choix à la place d'un terminal (380 ; 480),
dans lequel une détection automatique de l'utilisation du terminal (380 ; 480) est effectuée,
et dans lequel, pour le téléphone IP (310 ; 410), le mode d'économie d'énergie est activé et/ou désactivé automatiquement en fonction de l'utilisation détectée du terminal (380 ; 480), dans lequel le terminal (380 ; 480) établit une liaison à une installation de télécommunication (352 ; 452) au niveau de laquelle le téléphone IP (310 ; 410) est également exploité, et
dans lequel le terminal (380 ; 480) se connecte à l'installation de télécommunication (352 ; 452).

2. Procédé de commande de la consommation d'énergie d'un téléphone, dans lequel, pour le téléphone, est activé ou désactivé automatiquement un mode d'économie d'énergie en fonction d'au moins un laps de temps spécifié, à l'intérieur duquel le téléphone ne sera probablement pas utilisé,
dans lequel le téléphone est conçu en tant que téléphone IP (10 ; 310 ; 410) dans un réseau LAN (50 ; 350 ; 450),
dans lequel des premières données sont générées par lesquelles le laps de temps spécifié est déterminé sur la base d'une évaluation statistique (72, 74) par le biais d'un comportement d'utilisation qu'a eu jusqu'à présent un utilisateur du téléphone IP (10), en fonction :
- d'entrées de commande, en particulier par le biais d'appui de touches, de l'utilisateur au niveau du téléphone IP (10 ; 310 ; 410) et/ou
- de données entrantes pour le téléphone IP (10 ; 310 ; 410) et/ou
- d'activités d'un terminal (60) relié au téléphone IP (10), dans lequel à partir des premières données il est déterminé automatiquement quand le téléphone IP (10 ; 310 ; 410) ne sera probablement pas utilisé et quand le mode d'économie d'énergie sera automatiquement activé pour le téléphone IP (10 ; 310 ; 410) pendant la période de temps déterminée et
dans lequel sont spécifiées des secondes données (81) qui indiquent quand le téléphone IP (10) ne sera probablement pas utilisé, dans lequel le téléphone IP (10) est activé automatiquement en fonction des données spécifiées (81) dans un mode d'économie d'énergie ou le mode d'économie d'énergie est terminé, et
dans lequel il est prévu un terminal (480) d'un réseau de transmission de données (481), comme par exemple un réseau de transmission de données sans fil, en particulier un WLAN,
dans lequel une unité de commande (482) du réseau de transmission de données (481) établit une liaison à une installation de télécommunication (452) au niveau de laquelle le téléphone IP (410) est également exploité,
et dans lequel au moins une date est transférée par l'unité de commande (482) à l'installation de télécommunication (452),
et dans lequel, en fonction de la date transférée, le mode d'économie d'énergie est activé ou désactivé pour le téléphone IP (410), dans lequel l'au moins une date indique que le terminal (480) est en dehors de la zone dans laquelle le téléphone IP (410) est rattaché.

3. Procédé selon la revendication 1 ou 2, dans lequel la détermination automatique est exécutée dans le téléphone IP (10) ou au niveau d'un poste central ou dans une unité indépendante.

4. Procédé selon l'une quelconque des revendications précédentes,
dans lequel les secondes données spécifiées (81) sont fixées par des temps spécifiés, à savoir des spécifications de calendrier et/ou d'heures du jour, qui concernent par exemple des congés d'entreprise, des week-ends, des jours fériés, des jours de vacances et/ou des heures de la nuit et sont spécifiées de préférence de manière centrale pour plusieurs téléphones IP (10).

5. Procédé selon la revendication 4, dans lequel les secondes données spécifiées sont ou seront enregistrées dans une unité indépendante ou au niveau d'un poste central ou dans le téléphone IP.

6. Procédé selon l'une quelconque des revendications précédentes, dans lequel, dans le mode d'économie d'énergie, la luminosité d'une unité d'affichage (16) du téléphone IP (10) est diminuée et/ou l'unité d'affichage (16) est éteinte.

7. Procédé selon l'une quelconque des revendications précédentes, dans lequel le téléphone IP (10) est couplé à un terminal (60) du réseau LAN (50) par le biais d'un dispositif d'acheminement de paquets de données présent dans le téléphone IP (10) en tant que dit mini commutateur,
dans lequel, pour le téléphone IP (10), un mode d'économie d'énergie est automatiquement activé ou désactivé en fonction d'un flux de données en provenance ou en direction du terminal (60).

8. Procédé selon l'une quelconque des revendications 2 à 7, dans lequel le terminal (480) est également exploité en tant que terminal d'un réseau de radiocommunication mobile, en particulier d'un réseau GSM, d'un réseau UMTS ou d'un réseau LTE.

9. Procédé selon la revendication 7 dans lequel l'installation de télécommunication (352, 452) provoque la commutation du mode d'économie d'énergie en fonction du flux de données en provenance ou en direction du terminal (380, 480) ou en fonction de la date transférée.

10. Installation de télécommunication (352) comprenant :
un dispositif de commande (504) qui comporte des unités pour l'exécution d'un procédé de commande de la consommation d'énergie d'un téléphone IP (10 ; 310 ; 410) selon l'une quelconque des revendications 1 ou 2 ;
le dispositif de commande (504) comprenant :
une unité de commande de puissance (70 ; 370 ; 470) qui active automatiquement un téléphone IP (10 ; 310 ; 410)) dans le mode d'économie d'énergie en fonction d'au moins un laps de temps spécifié dans lequel le téléphone IP (10 ; 310 ; 410) ne sera probablement pas utilisé,
dans laquelle l'unité de commande est reliée à ou équipée de :
- une première unité statistique (72) pour l'évaluation statistique sur des temps d'utilisation du téléphone IP (310), et/ou
- une seconde unité statistique (74) pour l'évaluation statistique sur des activités d'un terminal (60) relié au téléphone IP (310), et/ou
- une unité de spécification (370) pour indiquer des spécifications de calendrier et/ou d'heures du jour ;
afin d'en déterminer au moins un laps de temps spécifié à l'intérieur duquel le téléphone IP (10 ; 310 ; 410) ne sera probablement pas utilisé ;
dans laquelle l'unité de commande de puissance (370 ; 470) génère des statistiques globales à partir des données statistiques de la première unité statistique (72) et/ou de la seconde unité statistique (74) et provoque l'activation et/ou la désactivation du mode d'économie d'énergie,
dans laquelle le dispositif de commande (504) rend possible l'utilisation en variante d'un téléphone IP (310 ; 410) rattaché à l'installation de télécommunication (352) et d'un autre appareil terminal (380) et
dans laquelle le dispositif de commande (504, 370) est constitué de manière à ce que, pour le téléphone IP (310 ; 410), l'activation et/ou la désactivation d'un mode d'économie d'énergie est provoquée en fonction de l'utilisation de l'autre appareil terminal (380).

11. Installation de télécommunication (452), comprenant :
un dispositif de commande (504) qui comporte des unités pour l'exécution d'un procédé de commande de la consommation d'énergie d'un téléphone IP (410) selon l'une quelconque des revendications 1 ou 2 ;
le dispositif de commande (504) comprenant :
une unité de commande de puissance (470) qui active automatiquement un téléphone IP (410)) dans le mode d'économie d'énergie en fonction d'au moins un laps de temps spécifié dans lequel le téléphone IP (410) ne sera probablement pas utilisé,
dans laquelle l'unité de commande est reliée à ou équipée de :
- une première unité statistique (72) pour l'évaluation statistique sur des temps d'utilisation du téléphone IP (410), et/ou
- une seconde unité statistique (74) pour l'évaluation statistique sur des activités d'un terminal (60) relié au téléphone IP (410), et/ou
- une unité de spécification (370) pour indiquer des spécifications de calendrier et/ou d'heures du jour ;
afin d'en déterminer au moins un laps de temps spécifié à l'intérieur duquel le téléphone IP (410) ne sera probablement pas utilisé ;
dans laquelle l'unité de commande de puissance (470) génère des statistiques globales à partir des données statistiques de la première unité statistique (72) et/ou de la seconde unité statistique (74) et provoque l'activation et/ou la désactivation du mode d'économie d'énergie ;
dans laquelle le dispositif de commande (504) rend possible l'utilisation d'un téléphone IP (410) rattaché à l'installation de télécommunication (452), et une interface (484) à un réseau de transmission de données sans fil (481) est employée pour un terminal (480) qui est utilisé par l'utilisateur du téléphone IP (410),
dans laquelle le dispositif de commande (504) est constitué de manière à ce qu'il provoque, pour le téléphone IP (410), l'activation et/ou la désactivation du mode d'économie d'énergie en fonction de la réception d'une date en provenance du réseau de transmission de données (481) dans l'installation de télécommunication (452), et
dans laquelle la date dépend du lieu du terminal (480).
